# FASCICULE DE BREVET EUROPEEN

(11) **EP 3 350 420 B1**
(45) Date de publication et mention de la délivrance du brevet: **12.01.2022**
(21) Numéro de dépôt: 16785191.4
(22) Date de dépôt: 15.09.2016
(51) Int. Cl.: F01D 25/28, F01D 25/24, B64F 5/00, B66C 1/00

(54) **INTERFACE ET DISPOSITIF DE SUPPORT POUR CARTER MOTEUR**
MOTORKURBELGEHÄUSESTÜTZVORRICHTUNG UND SCHNITTSTELLE
ENGINE CRANKCASE SUPPORTING DEVICE AND INTERFACE

(30) Priorité: 17.09.2015 FR 1558744
(43) Date de publication de la demande: 25.07.2018
(73) Titulaire: Safran Aircraft Engines, 75015 Paris (FR)
(72) Inventeur: DUBOIS, Margaux, Justine, Emma, 77550 Moissy-Cramayel Cedex (FR); CAETANO, Nelson, 77550 Moissy-Cramayel Cedex (FR); DEMOULIN, Alexandre, Christophe, Adrien, 77550 Moissy-Cramayel Cedex (FR)
(74) Mandataire: Cabinet Beau de Loménie
(86) Numéro de dépôt international: PCT/FR2016/052341
(87) Numéro de publication internationale: WO 2017/046536

(56) Documents cités:
- WO-A1-2015/114276
- FR-A1- 2 990 190
- US-A- 4 202 539
- US-A1- 2012 242 100

## Description

### Arrière-plan de l'invention

La présente invention concerne une interface de support. Plus particulièrement, l'invention concerne une interface de support pour carter moteur, notamment d'un moteur aéronautique comme un turboréacteur, qui soit adapté à être utilisé lors de la fabrication ou de la manutention du moteur.

L'invention concerne également un dispositif de support comprenant un tel interface, un ensemble comprenant un carter moteur et une telle interface de support, ainsi qu'un procédé de montage d'une telle interface sur un carter moteur.

Lors de l'assemblage ou manutention de moteurs, il est souvent nécessaire de soutenir le moteur dans une position élevée afin de permettre un accès plus aisé à ses différents composants. Pour cela, il est connu de former dans le carter externe d'un moteur, et notamment des moteurs aéronautiques à turbine, au moins deux cavités de réception diamétralement opposées destinées à recevoir chacune l'extrémité d'un bras support solidaire d'un bâti. Pour soutenir le moteur, un bras support est ainsi introduit dans chaque cavité et fixé au carter, maintenant le moteur dans une position souhaitée.

Avec une telle configuration, pour assurer un bon maintien de chaque bras, il est nécessaire que chaque cavité présente une profondeur utile suffisante.

Pour obtenir une telle profondeur, le carter est généralement muni de surépaisseurs locales, aussi appelées bossages, dans lesquelles sont usinées les cavités de réception pour les bras.

Ces surépaisseurs entraînent une augmentation considérable du poids du moteur. Or, pour des raisons évidentes de rendement, il est souhaitable que le poids du moteur soit minimisé et, en particulier, qu'il ne soit pas impacté par des pièces n'ayant aucune utilité en fonctionnement.

Afin de résoudre ce problème, des interfaces de support ont été proposées comprenant une pièce de couplage avec une face externe et une face interne, la face externe de cette pièce de couplage présentant une cavité apte à recevoir un bras de support, et la face interne de cette pièce de couplage étant apte à être montée sur une face externe du carter moteur.

Toutefois, même si ces interfaces de support de l'art antérieur permettent d'éviter au moins partiellement le surpoids qui résulterait de former des bossages directement sur le carter moteur, la fixation de ces interfaces de support sur le carter moteur est relativement complexe et peut exiger l'incorporation de moyens de fixation au carter qui alourdissent aussi celui-ci.

Le document WO 2015114276 A1 représentant l'état de l'art le plus proche, divulgue une interface de support pour carter de moteur, comprenant: une pièce de couplage avec une face externe, présentant une chape apte à être fixée à un bras de support, et une face interne, apte à être montée sur une face externe du carter moteur, ainsi qu'une première pluralité d'orifices entre la face externe et la face interne de la pièce de couplage; une première pluralité de corps de boulons, chacun comprenant une tige filetée reçue dans un orifice de la première pluralité d'orifices et une tête apte à appuyer sur la face externe de la pièce de couplage.

### Objet et résumé de l'invention

La présente divulgation concerne une interface de support pour carter moteur permettant de réduire encore plus la masse supplémentaire du carter requise pour sa fixation, tout en permettant une fixation plus simple avec un positionnement précis sur le carter moteur. Pour cela, dans au moins un mode de réalisation, cette interface de support comprend une pièce de couplage, une première pluralité de corps de boulons, et une pluralité de pions. La pièce de couplage a une face externe, présentant une cavité apte à recevoir un bras de support, et une face interne, apte à être montée sur une face externe du carter moteur, ainsi qu'une première pluralité d'orifices entre ses faces externe et interne. Chaque corps de boulon de la première pluralité de corps de boulons comprend une tige filetée reçue dans un orifice de la première pluralité d'orifices et une tête apte à appuyer sur la face externe de la pièce de couplage, et chaque pion de la pluralité de pions comprend un orifice taraudé dans lequel est engagée, à travers une première extrémité du pion, la tige fileté de l'un desdits corps de boulons, et une deuxième extrémité élargie, apte à appuyer sur une face interne du carter moteur.

Les pions facilitent en même temps le positionnement et la fixation de la pièce de couplage au carter moteur par les corps de boulons, sans devoir directement tarauder des orifices sur le carter moteur ou utiliser des écrous dont l'accès depuis la face interne du carter moteur pourrait être difficile.

Pour assurer aussi une transmission fiable des efforts dans au moins un plan transversal à l'un des corps de boulons, au moins un orifice de ladite première pluralité d'orifices peut présenter une surface interne complémentaire d'une surface externe de la première extrémité du pion correspondant. Plus spécifiquement, au moins deux orifices de ladite première pluralité d'orifices peuvent présenter chacun une surface interne axisymétrique complémentaire d'une surface externe de la première extrémité du pion correspondant, pour ainsi former ensemble deux liaisons de type pivot glissant, coopérant pour immobiliser l'interface de support dans toutes les directions par rapport au carter.

Par ailleurs, pour assurer un support plus fiable, la pièce de couplage peut présenter une deuxième pluralité d'orifices, chaque orifice de cette deuxième pluralité d'orifices étant taraudé et débouchant sur la face externe de la pièce de couplage. Les orifices de cette deuxième pluralité pourront ainsi offrir une liaison mécanique supplémentaire, notamment en traction, à un bras de support dont l'extrémité soit reçue dans la cavité sur la face externe de la pièce de couplage, pour éviter en particulier une sortie accidentelle de cette extrémité du bras de support de la cavité dans laquelle il est reçu.

La présente divulgation concerne aussi un dispositif de support comprenant une première interface de support du type susmentionné et un premier bras de support relié à un bâti et dont une extrémité est reçue dans la cavité de la pièce de couplage de la première interface de support. L'interface et le bras de support peuvent assurer ainsi une connexion stable entre le bâti et le carter moteur. En particulier, la pièce de couplage peut présenter une deuxième pluralité d'orifices, chaque orifice de cette deuxième pluralité d'orifices étant taraudé et débouchant sur la face externe de la pièce de support, le dispositif comprenant alors en outre une deuxième pluralité de corps de boulons reliant le bras de support à la pièce de couplage à travers les orifices taraudés de cette deuxième pluralité d'orifices, pour éviter en particulier une sortie accidentelle du bras de support de la cavité dans laquelle il est reçu.

Par ailleurs, le dispositif de support peut aussi comprendre une deuxième interface de support du même type et un deuxième bras de support relié à un bâti et dont une extrémité est reçue dans la cavité de la pièce de couplage de la deuxième interface de support.

La présente divulgation concerne aussi un ensemble comprenant au moins un carter moteur et une interface de support du type susmentionné, dans lequel les pions sont reçus dans des orifices traversant d'une face interne à une face externe du carter moteur, avec leurs deuxièmes extrémités élargies en appui sur la face interne du carter moteur. Afin de faciliter le montage de cet ensemble, les pions peuvent être reçus à pression dans lesdits orifices du carter moteur. Ainsi, ce montage à pression des pions évite leur rotation lors de l'engagement des tiges filetées des corps de boulons de la première pluralité dans les orifices taraudés des pions, facilitant ainsi cette opération.

Finalement, la présente divulgation concerne aussi un procédé de montage d'une interface de support du type susmentionné sur un carter moteur, comprenant les étapes suivantes :
introduction, depuis une face interne du carter moteur, dans des orifices traversant d'une face interne à une face externe du carter moteur, de chacun des pions jusqu'à sa deuxième extrémité élargie ;
placement de la pièce de couplage avec sa face interne sur la face externe du carter moteur et les orifices de la première pluralité d'orifices alignés sur les pions ;
engagement des tiges filetées de la première pluralité de corps de boulons, à travers la première pluralité d'orifices, dans les orifices taraudés des pions, afin d'immobiliser la pièce de couplage par rapport au carter moteur.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- La figure 1 est une vue d'ensemble d'un moteur, soutenu par un dispositif de support selon un exemple de réalisation de l'invention ;
- La figure 2A montre un détail du dispositif de support de la figure 1, fixé au carter moteur ;
- La figure 2B montre une coupe transversale du carter moteur, avec une partie du dispositif de support de la figure 1, suivant le plan IIB-IIB sur la figure 2A ;
- La figure 3A illustre une première étape d'un procédé de montage du dispositif de support de la figure 1, dans laquelle des pions sont introduits dans des orifices traversants du carter moteur depuis une face interne du carter moteur ;
- La figure 3B illustre des étapes subséquentes du procédé de montage du dispositif de support de la figure 1, dans lesquelles une pièce de couplage est placée sur une face externe du carter moteur et immobilisée sur celui-ci avec une première pluralité de boulons en engagement avec les pions ; et
- La figure 3C illustre des étapes finales du procédé de montage du dispositif de support de la figure 1, dans lesquelles un bras de support est reçu dans une cavité sur une face externe de la pièce de couplage, et encore relié à cette pièce de couplage par une deuxième pluralité de boulons.

### Description détaillée de l'invention

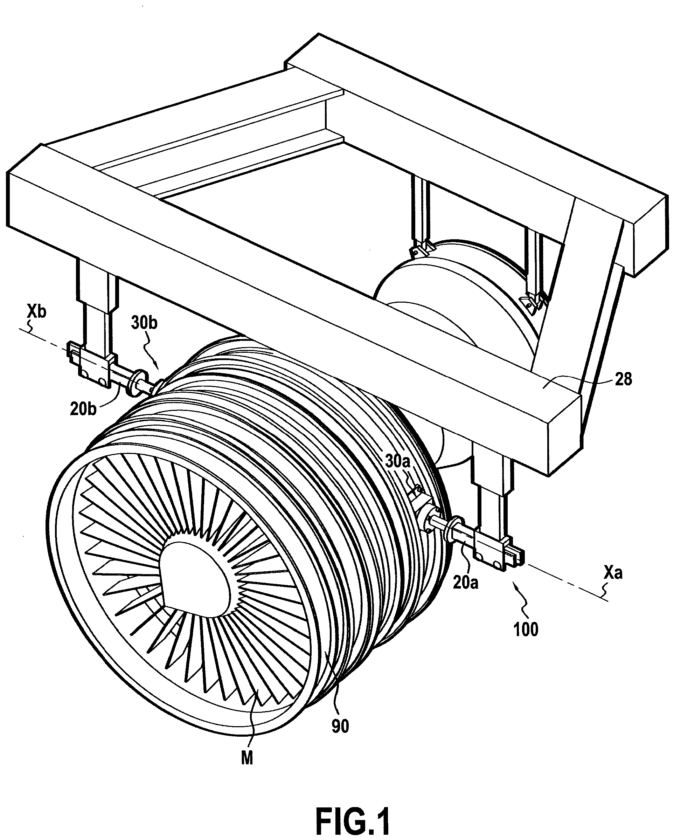

Sur la figure 1, on a représenté un dispositif de support 100 selon un exemple de réalisation de l'invention en coopération avec un carter annulaire 90 de soufflante d'un turboréacteur à double flux M. Un tel dispositif de support 100 peut cependant être appliqué de manière analogue à tout autre type de moteur comprenant un carter.

Dans l'exemple, le dispositif de support 100 comporte un bâti 28, deux bras de support 20a, 20b reliés au bâti et s'étendant selon des axes longitudinaux respectifs Xa, Xb horizontaux, deux interfaces de support 30a, 30b munie chacune d'une cavité de réception 42 pour l'un des bras de support 20a, 20b.

Chaque interface de support 30a,30b est ainsi destinée à relier le carter 90 à un bras de support 20a, 20b. En position montée sur le dispositif de support 100, et comme il sera décrit plus en détail dans la suite, le carter 90 est donc soutenu par les bras 20a, 20b, par l'intermédiaire des deux interfaces de support 30a, 30b.

Des moyens de déplacement (non représentés) permettent le déplacement de chaque bras 20a, 20b, notamment selon son axe longitudinal Xa, Xb.

Comme illustré sur la figure 1, les bras de support 20a, 20b sont positionnés sensiblement face à face et de sorte à ménager entre eux un espace de réception suffisant pour le carter de moteur 90. Dans l'exemple, plus particulièrement, les deux bras de support 20a, 20b sont coaxiaux.

Chaque bras 20a, 20b comporte, dans l'exemple, une portion distale 22 de section constante cylindrique, ici à profil circulaire, s'étendant depuis son extrémité.

Chaque bras 20a, 20b comporte en outre, à distance de son extrémité distale, une collerette externe 24 munie d'orifices de fixation 26, dont la fonction ressortira mieux de la suite de la présente description.

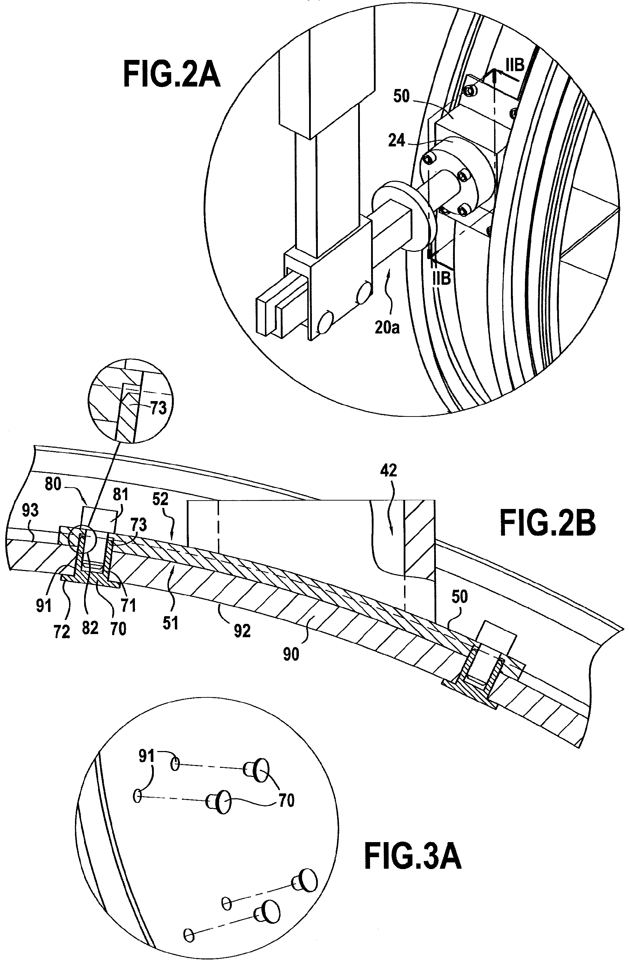

La première interface de support 30a est montrée en plus grand détail sur les figures 2A et 2B. Comme illustré sur les figures 2A et 2B, chaque interface de support 30a, 30b comprend une pièce de couplage 50 et des moyens d'assemblage provisoire de cette pièce de couplage 50 sur le carter 90. Dans l'exemple illustré, la pièce de couplage 50 comprend une face interne 51, une face externe 52, dans laquelle est formée la cavité 42, et une première pluralité d'orifices 53 traversant de la face interne 51 à la face externe 52, tandis que les moyens d'assemblage provisoire comprennent une pluralité de pions 70 et une première pluralité de corps de boulons 80. La deuxième interface de support 30b est analogue à la première en tous points, avec sa cavité 42 arrangée symétriquement par rapport à celle de la première interface de support 30a, quoique la configuration géométrique de la pièce de couplage 50, et notamment des orifices 53 sur celle-ci peut être différente afin de l'adapter à des contraintes géométriques qui peuvent être différentes de chaque côté du carter 90.

Chaque pion 70 comprend un orifice taraudé 71, débouchant sur une première extrémité 73 du pion 70, et une deuxième extrémité élargie formant une collerette 72. Chaque pion 70 est installé à demeure dans un orifice traversant 91 du carter 90, avec la collerette 72 en appui sur une face interne 92 du carter 90 et la première extrémité 73 en saillie par rapport à une face externe 93 du carter 90. Les pions 70 sont reçus à pression dans les orifices 91, de manière à retenir ces pions 70 axialement et en rotation par rapport au carter 90. Chaque corps de boulon 80 présente une tête 81 et une tige filetée 82. Les têtes 81 sont en appui contre la face externe 52 de la pièce de couplage 50, tandis que la tige filetée 82 de chaque corps de boulon 80 est complémentaire à l'orifice taraudé 71 d'un pion 70 correspondant et engagée dans cet orifice taraudé 71 à travers un orifice 53 correspondant de ladite première pluralité d'orifices 53 de la pièce de couplage 50. Pour cela, ces orifices 53 sont alignés sur les pions 70 et les orifices 91 du carter 90 dans lesquels les pions 70 sont installés.

Les pions 70 et les corps de boulons 80 coopèrent ainsi pour retenir axialement la pièce de couplage 50 avec sa face interne 51 plaquée contre une face externe 93 du carter 90. Dans l'exemple de réalisation illustré, chaque pion 70, dont la première extrémité 73, saillante, est en contact avec une surface interne de l'orifice 53 correspondant, reprend aussi des efforts transversaux aux axes des corps de boulons 80. Pour cela, cette surface interne de l'orifice 53 et la surface externe de la première extrémité 73 du pion 70 correspondant sont complémentaires. Elles peuvent en particulier être toutes deux axisymétriques, notamment cylindriques ou coniques, de manière à former une liaison de type pivot glissant. Deux telles liaisons peuvent ainsi suffire à immobiliser dans toutes les directions une pièce de couplage 50 par rapport au carter 90.

Par ailleurs, la pièce de couplage 50 comprend aussi une deuxième pluralité d'orifices 54 arrangés autour de la cavité 42. Ces orifices 54 sont taraudés et alignés avec les orifices de fixation 26 de la collerette externe 24 du bras 20a, 20b, de manière à pouvoir recevoir, à travers ces orifices de fixation 26, les tiges filetées de boulons 85 reliant la collerette externe 24 du bras 20a, 20b à la pièce de couplage 50 et reprenant des efforts en traction pour éviter une sortie accidentelle de l'extrémité du bras 20a, 20b de la cavité 42. Il n'est pas nécessaire que les boulons 85 soient serrés fermement, et il peut même être préférable de laisser un certain jeu entre les têtes des boulons 85 et la collerette externe 24 du bras 20a, 20b correspondant.

Un procédé de montage de ce dispositif de support 100 peut être décrit en référence aux figures 3A à 3C. Dans une première étape de ce procédé, les pions 70 sont insérés à pression dans les orifices 91 du carter 90, depuis la face interne 92 du carter 90. Il convient de préciser que cette étape peut être effectuée avant l'assemblage du carter 90 autour du turboréacteur à double flux M, facilitant ainsi l'accès à la face interne 92 pour l'opération d'insertion des pions 70.

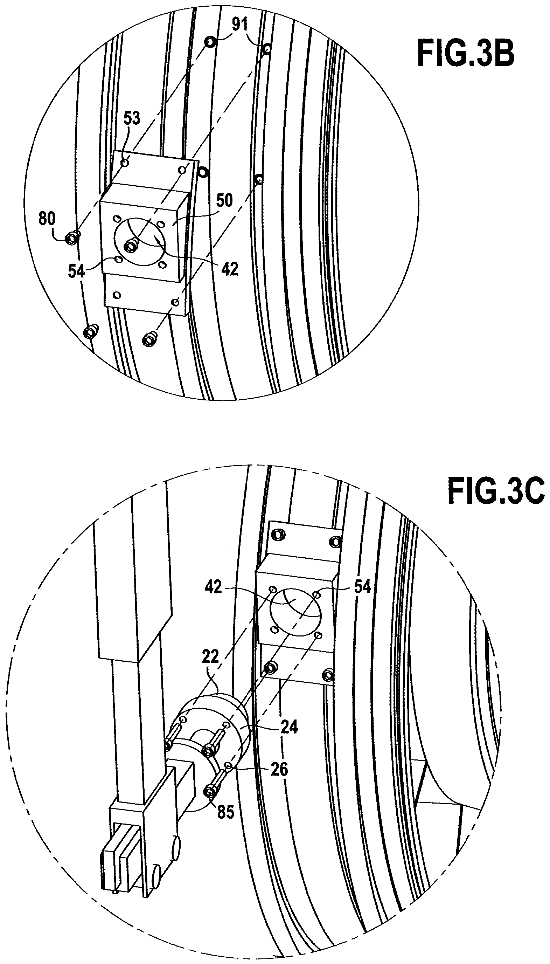

Dans une deuxième étape, illustrée sur la figure 3B, la pièce de couplage 50 est placée sur la face externe 93 du carter 90, avec les surfaces 51a,51b de la face interne 51 de la pièce de couplage 50 coopérant avec les surfaces complémentaires 93a,93b de la face externe 93 du carter 90, et les orifices 53 de sa première pluralité d'orifices de la pièce de couplage 50 alignés sur les pions 70 et les orifices 91 les recevant.

Ensuite, dans une troisième étape, également illustré sur la figure 3B, les tiges filetées 82 des boulons 80 sont engagées dans les orifices taraudés 71 des pions 70 à travers les orifices 53 de la pièce de couplage 50 et serrés pour immobiliser la pièce de couplage 50 par rapport au carter 90.

Une fois que les pièces de couplage 50 sont ainsi immobilisées par rapport au carter 90 pour former les interfaces de support 30a,30b, on peut procéder à une quatrième étape, illustrée sur la figure 3C, de déplacement de chaque bras 20a, 20b pour son insertion dans la cavité 42 correspondante. Finalement, dans une cinquième étape également illustrée sur la figure 3C, les tiges filetées des boulons 85 sont engagées dans les orifices taraudés 54 de chaque pièce de couplage 50 à travers les orifices de fixation 26 de la collerette externe 24 du bras 20a, 20b correspondant pour retenir chaque bras 20a, 20b par rapport à la pièce de couplage 50 correspondante et éviter ainsi un désengagement accidentel des bras 20a, 20b. Le turboréacteur à double flux M pourra ainsi être soutenu par le bâti 28 à travers les bras 20a, 20b, les interfaces de support 30a,30b et le carter 90.

Chacune des deuxième à cinquième étapes est réversible dans l'ordre inversé. Ainsi, si l'on veut désolidariser le turboréacteur à double flux M du bâti 28, on commence par retirer les boulons 85, pour ensuite extraire les bras 20a, 20b des cavités 42 correspondantes. Les boulons 80 et les pièces de couplage 50 peuvent alors être retirés pour ne laisser sur le carter 90 que les pions 70, installés à demeure dans les orifices 91.

Quoique la présente invention ait été décrite en se référant à un exemple de réalisation spécifique, il est évident que des différentes modifications et changements peuvent être effectués sur cet exemple sans sortir de la portée générale de l'invention telle que définie par les revendications. Par conséquent, la description et les dessins doivent être considérés dans un sens illustratif plutôt que restrictif.

## Revendications

1. Interface de support (30a,30b) pour carter moteur (90), comprenant :
une pièce de couplage (50) avec une face externe (52), présentant une cavité (42) apte à recevoir un bras de support (20a,20b), et une face interne (51), apte à être montée sur une face externe (93) du carter moteur (90), ainsi qu'une première pluralité d'orifices (53) entre la face externe (52) et la face interne (51) de la pièce de couplage (50) ;
une première pluralité de corps de boulons (80), chacun comprenant une tige filetée (82) reçue dans un orifice (53) de la première pluralité d'orifices (53) et une tête (81) apte à appuyer sur la face externe (52) de la pièce de couplage ; et
une pluralité de pions (70), chacun comprenant un orifice taraudé (71) dans lequel est engagée, à travers une première extrémité (73) du pion (70), la tige filetée (82) de l'un des corps de boulons (80) de la première pluralité de corps de boulons (80), et une deuxième extrémité élargie, apte à appuyer sur une face interne (92) du carter moteur (90).

2. Interface de support (30a,30b) suivant la revendication 1, dans laquelle au moins un orifice (53) de ladite première pluralité d'orifices (53) présente une surface interne complémentaire d'une surface externe de la première extrémité (73) du pion (70) correspondant.

3. Interface de support (30a,30b) suivant la revendication 2, dans laquelle au moins deux orifices (53) de ladite première pluralité d'orifices (53) présentent chacun une surface interne axisymétrique complémentaire d'une surface externe de la première extrémité (73) du pion (70) correspondant.

4. Interface de support (30a,30b) suivant l'une quelconque des revendications précédentes, dans laquelle la pièce de couplage (50) présente une deuxième pluralité d'orifices (54), chaque orifice (54) de cette deuxième pluralité d'orifices (54) étant taraudé et débouchant sur la face externe (52) de la pièce de couplage (50).

5. Dispositif de support (100) pour un carter moteur (90), comprenant au moins une première interface de support (30a,30b) suivant l'une quelconque des revendications 1 à 3, et un premier bras de support (20a,20b) relié à un bâti (28) et dont une extrémité est reçue dans la cavité (42) de la pièce de couplage (50) de la première interface de support (30a,30b).

6. Dispositif de support (100) pour un carter moteur (90) suivant la revendication 5, dans lequel la pièce de couplage (50) présente une deuxième pluralité d'orifices (54), chaque orifice (54) de cette deuxième pluralité d'orifices (54) étant taraudé et débouchant sur la face externe (52) de la pièce de couplage (50), le dispositif de support (100) comprenant en outre une deuxième pluralité de corps de boulons (85) reliant le premier bras de support (20a,20b) à la pièce de couplage (50) à travers les orifices (54) de cette deuxième pluralité d'orifices (54).

7. Dispositif de support (100) pour un carter moteur suivant l'une quelconque des revendications 5 ou 6, comprenant une deuxième interface de support (30a,30b) suivant l'une quelconque des revendications 1 à 4, et un deuxième bras de support (20a,20b) relié à un bâti (28) et dont une extrémité est reçue dans la cavité (42) de la pièce de couplage (50) de la deuxième interface de support (30a,30b).

8. Ensemble comprenant au moins un carter moteur (90) et une interface de support (30a,30b) suivant l'une quelconque des revendications 1 à 4, dans lequel les pions (70) sont reçus dans des orifices (91) traversant d'une face interne (92) à une face externe (93) du carter moteur (90), avec leurs deuxièmes extrémités élargies en appui sur la face interne (92) du carter moteur (90).

9. Ensemble suivant la revendication 8, dans lequel les pions (70) sont reçus à pression dans lesdits orifices (91) du carter moteur (90).

10. Procédé de montage d'une interface de support (30a,30b) suivant l'une quelconque des revendications 1 à 4 sur un carter moteur (90), comprenant les étapes suivantes :
introduction, depuis une face interne (92) du carter moteur (90), dans des orifices (91) traversant d'une face interne (92) à une face externe (93) du carter moteur (90), de chacun des pions (70) jusqu'à sa deuxième extrémité élargie ;
placement de la pièce de couplage (50) avec sa face interne (51) sur la face externe (93) du carter moteur (90) et les orifices (53) de la première pluralité d'orifices (53) alignés sur les pions (70) ;
engagement des tiges filetées (82) de la première pluralité de corps de boulons (80), à travers la première pluralité d'orifices (53), dans les orifices taraudés (71) des pions (70), afin d'immobiliser la pièce de couplage (50) par rapport au carter moteur (90).

## Patentansprüche

1. Stützschnittstelle (30a, 30b) für Motorgehäuse (90), die umfasst:
ein Kopplungsteil (50) mit einer äußeren Seite (52), die einen Hohlraum (42) aufweist, der geeignet ist, einen Stützarm (20a, 20b) aufzunehmen, und einer inneren Seite (51), die geeignet ist, an einer äußeren Seite (93) des Motorgehäuses (90) montiert zu sein, sowie einer ersten Vielzahl von Öffnungen (53) zwischen der äußeren Seite (52) und der inneren Seite (51) des Kopplungsteils (50);
eine erste Vielzahl von Bolzenkörpern (80), die jeweils einen Gewindeschaft (82), der in einer Öffnung (53) von der ersten Vielzahl von Öffnungen (53) aufgenommen ist, und einen Kopf (81) umfassen, der geeignet ist, auf der äußeren Seite (52) des Kopplungsteils aufzuliegen; und
eine Vielzahl von Stiften (70), die jeweils eine Öffnung (71) mit Innengewinde, in denen der Gewindeschaft (82) von einem der Bolzenkörper (80) von der ersten Vielzahl von Bolzenkörpern (80) über ein erstes Ende (73) des Stiftes (70) in Eingriff ist, und ein zweites, verbreitertes Ende umfassen, das geeignet ist, auf einer inneren Seite (92) des Motorgehäuses (90) aufzuliegen.

2. Stützschnittstelle (30a, 30b) nach Anspruch 1, wobei mindestens eine Öffnung (53) von der ersten Vielzahl von Öffnungen (53) eine innere Oberfläche aufweist, die eine äußere Oberfläche des ersten Endes (73) des entsprechenden Stiftes (70) ergänzt.

3. Stützschnittstelle (30a, 30b) nach Anspruch 2, wobei mindestens zwei Öffnungen (53) von der ersten Vielzahl von Öffnungen (53) jeweils eine achsensymmetrische innere Oberfläche aufweisen, die eine äußere Oberfläche des ersten Endes (73) des entsprechenden Stiftes (70) ergänzt.

4. Stützschnittstelle (30a, 30b) nach einem der vorhergehenden Ansprüche, wobei das Kopplungsteil (50) eine zweite Vielzahl von Öffnungen (54) aufweist, wobei jede Öffnung (54) von dieser zweiten Vielzahl von Öffnungen (54) ein Innengewinde aufweist und auf der äußeren Seite (52) des Kopplungsteils (50) mündet.

5. Stützvorrichtung (100) für Motorgehäuse (90), die mindestens eine erste Stützschnittstelle (30a, 30b) nach einem der Ansprüche 1 bis 3 und einen ersten Stützarm (20a, 20b) umfasst, der mit einem Gestell (28) verbunden ist und von dem ein Ende in dem Hohlraum (42) des Kopplungsteils (50) der ersten Stützschnittstelle (30a, 30b) aufgenommen ist.

6. Stützvorrichtung (100) für Motorgehäuse (90) nach Anspruch 5, wobei das Kopplungsteil (50) eine zweite Vielzahl von Öffnungen (54) aufweist, wobei jede Öffnung (54) von dieser zweiten Vielzahl von Öffnungen (54) ein Innengewinde aufweist und auf der äußeren Seite (52) des Kopplungsteils (50) mündet, wobei die Stützvorrichtung (100) ferner eine zweite Vielzahl von Bolzenkörpern (85) aufweist, die den ersten Stützarm (20a, 20b) mit dem Kopplungsteil (50) über die Öffnungen (54) von dieser zweiten Vielzahl von Öffnungen (54) verbinden.

7. Stützvorrichtung (100) für Motorgehäuse nach einem der Ansprüche 5 oder 6, die eine zweite Stützschnittstelle (30a, 30b) nach einem der Ansprüche 1 bis 4 und einen zweiten Stützarm (20a, 20b) umfasst, der mit einem Gestell (28) verbunden ist und von dem ein Ende in dem Hohlraum (42) des Kopplungsteils (50) der zweiten Stützschnittstelle (30a, 30b) aufgenommen ist.

8. Anordnung, die mindestens ein Motorgehäuse (90) und eine Stützschnittstelle (30a, 30b) nach einem der Ansprüche 1 bis 4 umfasst, wobei die Stifte (70) in Öffnungen (91) aufgenommen sind, die von einer inneren Seite (92) zu einer äußeren Seite (93) des Motorgehäuses (90) durchgehen, wobei ihre zweiten, verbreiterten Enden auf der inneren Seite (92) des Motorgehäuses (90) anliegen.

9. Anordnung nach Anspruch 8, wobei die Stifte (70) mit Druck in den Öffnungen (91) des Motorgehäuses (90) aufgenommen sind.

10. Verfahren zur Montage einer Stützschnittstelle (30a, 30b) nach einem der Ansprüche 1 bis 4 an einem Motorgehäuse (90), das die folgenden Schritte umfasst:
Einführen von jedem der Stifte (70) bis zu seinem zweiten, verbreiterten Ende, ausgehend von einer inneren Seite (92) des Motorgehäuses (90) in Öffnungen (91), die von einer inneren Seite (92) zu einer äußeren Seite (93) des Motorgehäuses (90) durchgehen;
Platzieren des Kopplungsteils (50) mit seiner inneren Seite (51) auf der äußeren Seite (93) des Motorgehäuses (90) und den auf die Stifte (70) ausgerichteten Öffnungen (53) von der ersten Vielzahl von Öffnungen (53);
Ineingriffbringen der Gewindeschafte (82) von der ersten Vielzahl von Bolzenkörpern (80) durch die erste Vielzahl von Öffnungen (53) in den Gewindeöffnungen (71) der Stifte (70), um das Kopplungsteil (50) in Bezug auf das Motorgehäuse (90) festzustellen.

## Claims

1. A support interface (30a, 30b) for an engine casing (90), the interface comprising:
a coupling part (50) having an outer face (52) with a cavity (42) suitable for receiving a support arm (20a, 20b), and an inner face (51) suitable for being mounted on an outer face (93) of the engine casing (90), together with a first plurality of orifices (53) between the outer face (52) and the inner face (51) of the coupling part (50);
a first plurality of bolts (80), each having a threaded shank (82) received in an orifice (53) of the first plurality of orifices (53) and a head (81) suitable for bearing against the outer face (52) of the coupling part; and
a plurality of pegs (70), each having a threaded orifice (71) in which the threaded shank (82) of one of the bolts (80) of the first plurality of bolts (80) is engaged through a first end (73) of the peg (70), each peg also having a second end that is enlarged and suitable for bearing against an inner face (92) of the engine casing (90).

2. A support interface (30a, 30b) according to claim 1, wherein at least one orifice (53) of said first plurality of orifices (53) presents an inside surface complementary to an outside surface of the first end (73) of the corresponding peg (70).

3. A support interface (30a, 30b) according to claim 2, wherein at least two orifices (53) of said first plurality of orifices (53) each present an axisymmetric inside surface that is complementary to an outside surface of the first end (73) of the corresponding peg (70) .

4. A support interface (30a, 30b) according to any preceding claim, wherein the coupling part (50) presents a second plurality of orifices (54), each orifice (54) of the second plurality of orifices (54) being threaded and opening out in the outer face (52) of the coupling part (50) .

5. A support device (100) for an engine casing (90) having at least a first support interface (30a, 30b) according to any one of claims 1 to 3, and a first support arm (20a, 20b) connected to a frame (28) and having one end received in the cavity (42) of the coupling part (50) of the first support interface (30a, 30b) .

6. A support device (100) for an engine casing (90), the device being according to claim 5, wherein the coupling part (50) presents a second plurality of orifices (54), each orifice (54) of the second plurality of orifices (54) being threaded and opening out in the outer face (52) of the coupling part (50), the support device (100) further comprising a second plurality of bolts (85) connecting the first support arm (20a, 20b) to the coupling part (50) through the orifices (54) of said second plurality of orifices (54).

7. A support device (100) for an engine casing, the device being according to claim 5 or claim 6, and including a second support interface (30a, 30b) according to any one of claims 1 to 4, together with a second arm (20a, 20b) connected to a frame (28) and having one end received in the cavity (42) of the coupling part (50) of the second support interface (30a, 30b).

8. An assembly comprising at least one engine casing (90) and a support interface (30a, 30b) according to any one of claims 1 to 4, wherein the pegs (70) are received in orifices (91) going from an inner face (92) to an outer face (93) of the engine casing (90), the pegs having enlarged second ends bearing against the inner face (92) of the engine casing (90).

9. An assembly according to claim 8, wherein the pegs (70) are received by being pressed into said orifices (91) in the engine casing (90).

10. A method of mounting a support interface (30a, 30b) according to any one of claims 1 to 4 on an engine casing (90), the method comprising the following steps:
inserting each of the pegs (70) as far as its enlarged second end from an inner face (92) of the engine casing (90) into the orifices (91) going from an inner face (92) to an outer face (93) of the engine casing (90) ;
placing the coupling part (50) with its inner face (51) on the outer face (93) of the engine casing (90) and the orifices (53) of the first plurality of orifices (53) in alignment with the pegs (70); and
engaging the threaded shanks (82) of the first plurality of bolts (80) through the first plurality of orifices (53) into the threaded orifices (71) of the pegs (70) in order to hold the coupling part (50) stationary relative to the engine casing (90).
